# EUROPEAN PATENT APPLICATION

(11) **EP 2 645 713 A1**
(43) Date of publication of application: **02.10.2013**
(21) Application number: 12305389.4
(22) Date of filing: 30.03.2012
(51) Int. Cl.: H04N 7/26

(54) **Method and apparatus for encoding a selected spatial portion of a video stream**

(71) Applicant: Alcatel Lucent, 75007 Paris (FR)
(72) Inventor: Rondao Alface, Patrice, 1400 Nivelles (BE); Macq, Jean-Francois, 1083 Ganshoren (BE); Verzijp, Nico, 2018 Antwerpen (BE)
(74) Representative: D'Halleweyn, Nele Veerle Trees Gertrudis

(57) **Abstract**

A method for encoding a selected spatial portion of an original video stream as a stand-alone video stream, said method comprising obtaining picture element information pertaining to said selected spatial portion; obtaining encoding hints derived from a complementary spatial portion of said original video stream that is peripheral to said selected spatial portion; and encoding said selected spatial portion with use of said encoding hints.

## Description

### Field of the Invention

The present invention relates to the field of video stream encoding.

### Background

For certain types of video content, such as televised sports events, concerts, theater productions, etc., the viewer may at certain times be interested in seeing high-quality overview shots, while desiring to zoom in on specific parts of the action at other times. Known client-side pan/tilt/zoom (PTZ) functions result in a loss of quality or resolution of the enlarged image portion. Known server-side pan/tilt/zoom (PTZ) functions result in a massive amount of computation at the server side.

### Summary

It is an object of embodiments of the present invention to provide client-side PTZ functionality in such a way that the resulting image retains a very high quality, while computational resources are used more efficiently.

According to an aspect of the invention, there is provided a method for encoding a selected spatial portion of an original video stream as a stand-alone video stream, the method comprising: obtaining picture element information pertaining to the selected spatial portion; obtaining encoding hints derived from a complementary spatial portion of the original video stream that is peripheral to the selected spatial portion; and encoding the selected spatial portion with use of the encoding hints.

It is an advantage of the method according to the invention that the encoding process for the selected portion can be made more efficient by taking into account information about the bigger picture, in particular, features of the original video stream appearing in a region outside the selected portion, but close enough to be of a nature to influence the coding of subsequent frames. Relevant peripheral features are preferably selected on the basis of the motion of these features, and of the "motion" of the selected portion; i.e., the motion of the image that is induced by any panning, tilting, or zooming with respect to the original video stream.

It is a further advantage of the method according to the invention that the improvement is obtained at the encoding stage, regardless of where the derivation of the encoding hints has taken place. This setup allows part of the hint derivation process, in particular the feature and motion extraction in respect to the original video feed, to be separated from the remaining method steps. In this way, centralization of these separated steps is made possible, leading to increased efficiently if multiple encodings are to be performed.

In an embodiment, the method according to the present invention further comprises obtaining the original video stream; obtaining selection information representing the selected spatial portion of the stand-alone video-stream; and extracting the picture element information pertaining to the selected spatial portion from the original video stream in accordance with the selection information.

It is an advantage of this embodiment that the information of the original video stream is used to generate the reduced video, such that the quality (e.g., resolution) of the original video stream can be retained to the greatest possible extent in the reduced video stream.

In an embodiment, the method according to the present invention further comprises obtaining motion and feature information pertaining to the original video stream; identifying relevant features pertaining to a region that is peripheral to the selected spatial portion in the motion and feature information; and deriving the encoding hints from the identified relevant features.

It is an advantage of this embodiment that the information of the original video stream is used to generate the motion and feature information, such a maximum of available information can be taken into account for generating the encoding hints. Preferably, the motion adapter is configured to identify the relevant features by comparing a motion vector of a candidate feature to a motion vector representing a pan/tilt/zoom movement of the selected spatial portion. Accordingly, features in a region peripheral to the selected portion can be detected as moving into the region of interest, in which case their appearance can be anticipated, and new values may be selected for variable encoding parameters so as to optimally deal with the anticipated presence of that feature.

In an embodiment of the method according to the present invention, the encoding is performed by means of a scalable video codec.

In a particular embodiment, the original video stream is provided as the base layer for the encoding.

In a particular embodiment, the scalable video codec is an H.264 SVC codec.

In an embodiment of the method according to the present invention, the obtaining of the picture element information pertaining to the selected spatial portion comprises obtaining an encoded video stream, and the encoding comprises transcoding the encoded video stream.

The original video stream and/or the selected spatial portion may originally be available as encoded streams only. In that case, judicious transcoding would be more efficient than decoding and recoding of the raw video stream.

According to an aspect of the invention, there is provided a computer program adapted to perform, when executed, the method according to embodiments of the present invention.

According to an aspect of the invention, there is provided a computer readable storage medium comprising instructions to cause a data processing apparatus to carry out steps of the method according to embodiments of the present invention.

According to an aspect of the invention, there is provided an apparatus for encoding a selected spatial portion of an original video stream as a stand-alone video stream, the apparatus comprising: a video input interface for receiving the original video stream; a selection information input interface for receiving selection information representing the selected spatial portion; a motion and feature information input interface for receiving feature information derived from the original video stream; a panorama reframer, operatively coupled to the video input interface and the selection information input interface, the panorama reframer being configured to extract picture element information pertaining to the selected spatial portion from the original video stream in accordance with the selection information; a motion adapter, operatively coupled to the motion and feature information input interface and the selection information input interface, the motion adapter being configured to identify relevant features pertaining to a region that is peripheral to the selected spatial portion in the motion and feature information and to derive encoding hints from the identified relevant features; and a hinted encoder, operatively coupled to the panorama reframer and the motion adapter, the hinted encoder being configured to encode the selected spatial portion with use of the encoding hints.

In an embodiment of the apparatus according to the present invention, the hinted encoder is configured to encode the selected spatial portion by means of a scalable video codec.

In a particular embodiment, the hinted encoder is configured to provide the original video stream as the base layer for the encoding.

In a particular embodiment, the scalable video codec is an H.264 SVC codec.

In an embodiment of the apparatus according to the present invention, the video input interface is configured to obtain the video stream as an encoded video stream, and wherein the hinted encoder is configured to transcode the encoded video stream.

The invention further provides a system for encoding a selected spatial portion of an original video stream as a stand-alone video stream, the system comprising a feature analyzer configured to extract motion information pertaining to features in the peripheral portion, and a number of apparatus according to any of claims 9-13, the feature analyzer being coupled to respective motion and feature information interfaces of the apparatus.

The effects and advantages of the apparatus and systems according to embodiments of the present invention are substantially the same, *mutatis mutandis,* as those of the corresponding methods according to embodiments of the present inventions.

### Brief Description of the Figures

Some embodiments of apparatus and/or methods in accordance with embodiments of the present invention are now described, by way of example only, and with reference to the accompanying drawings, in which:
Figure 1 provides a flow chart of a method according to an embodiment of the present invention;
Figure 2 provides a schematic illustration of an apparatus and a system according to embodiments of the present invention; and
Figure 3 illustrates the motion vector comparison performed in embodiments of the present invention.

### Description of Embodiments

The invention is related to a system composed of a proxy serving multiple users which can request a personalized region of interest (RoI), in a pan-tilt-zoom (PTZ) interactive fashion, from a high resolution video panorama. The invention is further related to the optimization of the computational cost at the proxy side of the video encoding of these personalized video streams from the same video panorama source. The term "panorama" is generally used herein to designate a high-resolution video resolution, typically above 4000 pixels wide, which may contain a cylindrical or spherical mapping of a wide-angle view or representation of a physical space as a video. Optionally, the panorama may be composed from the different video sources which are integrated and fused together.

Current solutions perform user requested cropping and PTZ operations in order to generate the desired RoI frame at time t in raw data and encode it using a H.264, or WebM alike codec with motion compensation and/or intra coding.

Unfortunately, using this technique, motion compensation/estimation and intra prediction modes must be computed for all users even though some request a common or overlapping RoI. This results in a poor system scalability as the proxy cannot benefit from the fact the input video panorama is the same for all users. The same can be said for systems providing transcoding with hardware acceleration for video adaptation to mobile devices.

In the present description, video coding terminology will be used that is common to the context of the H.264 Recommendation. The skilled reader will understand that this is only done to clarify the text, and that this choice of terminology is not intended to limit the scope of the invention to systems in which that particular encoding standard is applied.

In embodiments of the present invention, the overall computational complexity of the RoI motion estimation and intra prediction is reduced by computing relative motion and intra prediction directions directly from the panorama. As a result, the speed of computation is enhanced. The scalability of the resulting system is the main advantage, as adding new clients leads to a minor computational complexity increase.

Embodiments of the invention are based on the insight of the inventors that this advantage may be achieved by carrying out the following two steps:
1) The motion analysis (as well as intra prediction direction estimation) is performed on the full panorama at full resolution for each panorama pixel.
2) RoI-relative motion can then be computed from these panorama motion vectors by compensating the possible RoI user-requested displacement and resolution changes. In practice these compensated motion vectors are sent as hints to the encoder devoted to the coding of that RoI. The encoder can refine this motion vector "hint" if necessary.

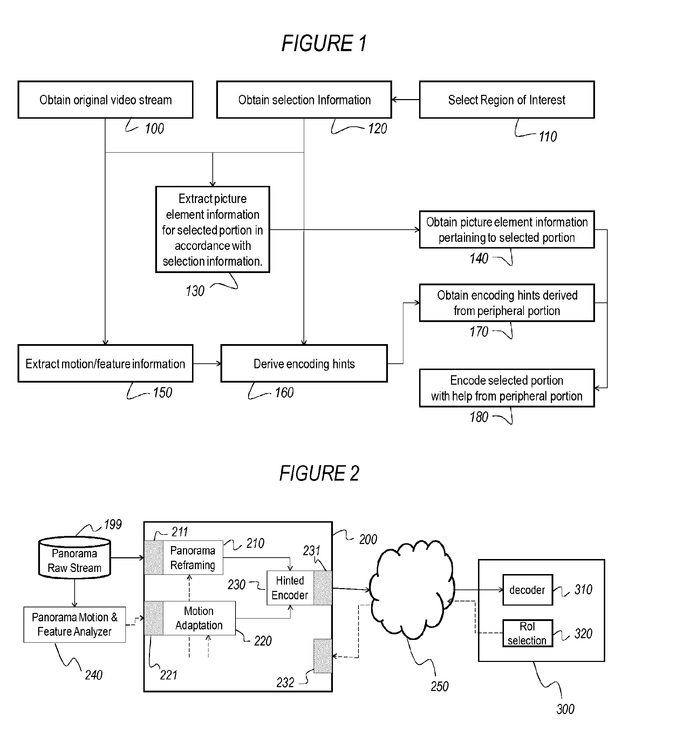

Figure 1 provides a flow chart of a method according to an embodiment of the present invention. The skilled person shall appreciate that the various illustrated steps are not necessarily performed by a single entity. In addition, steps shown as taking place in parallel may be conducted consecutively, and vice versa, unless it is clear from the description that a certain order is indeed required.

According to the illustrated embodiment, the original video stream is obtained **100** and used on the one hand to extract the relevant picture element information for the selected region **130,** and on the other hand to extract motion and feature information **150.**

In order to perform the extraction of the picture element information for a selected region, a region of interest (RoI) must have been selected **110,** typically by a viewer via a video client device, but alternatively or additionally by a human director or a automated script, and this selection information must be obtained **120** at the extraction side. The selection action may be limited to panning, zooming, and tilting with respect to the original video stream, wherein the aspect ratio of the selected region is preferably limited to a fixed aspect ratio associated with the viewing device (e.g., 3×4 or 16×9). Picture element information is meant to comprise any form of representation of the video images within the selected region. This may be a stream of uncompressed video images, or an encoded video stream. Embodiments of the method according to the invention present the advantage are that motion is computed at highest resolution, possibly in a multi-resolution approach, where all data is available (i.e. the panorama) and thus achieves highest accuracy. Embodiments of the method according to the invention present the further advantage that overlapping RoIs or aligned RoIs for different users do not require a duplication of the motion estimation effort for their respective encoders as motion data is pre-computed on the panorama.

Encoding hints are derived **160** from the extracted motion and feature information. While the motion and feature information is extracted from the original video stream, taking into account all available information, the encoding hint derivation selects those features that are relevant for improving the encoding performance, as will be described in more detail below.

The encoder obtains the picture element information pertaining to the selected portion **140** and the encoding hints **170,** typically derived from a peripheral portion. On the basis of these inputs, the encoder encodes **180** the selected portion of the video stream.

The encoding hints are bits of information derived from the non-selected portion of the original video stream, used in addition to the information about the selected portion, to improve the encoding of the latter. To accomplish this, methods according to embodiments of the present invention track navigation and zoom commands from the client (at step **120),** and then scale the global motion data in response to zoom commands and add RoI motion in response to panning or tilting commands (at step **160).** The encoding (at step **180)** takes place on the basis of the obtained set of motion vectors, which are used either as hints as or actual motion vectors: If the reference frame area is not available in the encoder, a predicted motion vector and a search window range are sent to the encoder or an intra prediction mode.

The aforementioned method may in general be carried out by an apparatus for encoding a selected spatial portion of an original video stream as a stand-alone video stream, the apparatus comprising means for obtaining picture element information **140** pertaining to the selected spatial portion; means for obtaining encoding hints **170** derived from a complementary spatial portion of the original video stream that is peripheral to the selected spatial portion; and means for encoding the selected spatial portion **180** with use of the encoding hints.

The apparatus may further comprise means for obtaining the original video stream **100;** means for obtaining selection information **120** representing the selected spatial portion of the stand-alone video-stream; and means for extracting the picture element information **130** pertaining to the selected spatial portion from the original video stream in accordance with the selection information.

More specifically, the apparatus may further comprise means for obtaining motion and feature information **150** pertaining to the original video stream; means for identifying relevant features pertaining to a region that is peripheral to the selected spatial portion in the motion and feature information; and means for deriving the encoding hints **160** from the identified relevant features.

The means for encoding **180** may operate with a scalable video codec. More specifically, the means for encoding **180** may provide the original video stream as the base layer for the encoding. Also more specifically, the scalable video codec may be an H.264 SVC codec.

The means for obtaining the picture element information **140** pertaining to the selected spatial portion, may be adapted to obtain an encoded video stream, and the encoding means **180** may be adapted to transcode the encoded video stream.

Figure 2 provides a schematic illustration of an apparatus and a system according to embodiments of the present invention. The apparatus **200** comprises a video input interface **211** for receiving said original video stream **199,** a selection information input interface **232** for receiving selection information representing said selected spatial portion, a motion and feature information input interface **221** for receiving feature information derived from said original video stream, a panorama reframer **211,** operatively coupled to said video input interface **211** and said selection information input interface **232,** said panorama reframer **211** being configured to extract picture element information pertaining to said selected spatial portion from said original video stream in accordance with said selection information, a motion adapter **220,** operatively coupled to said motion and feature information input interface **221** and said selection information input interface **232,** said motion adapter **220** being configured to identify relevant features pertaining to a region that is peripheral to said selected spatial portion in said motion and feature information and to derive encoding hints from said identified relevant features, and a hinted encoder **230,** operatively coupled to said panorama reframer **210** and said motion adapter **220,** said hinted encoder **230** being configured to encode said selected spatial portion with use of said encoding hints.

The apparatus **200** further has an output interface **231** for sending the encoded selected video stream to a client **300** over a network **250.** The illustrated network **250** may consist of one or more network links. It typically includes an access link on the client side.

The term "interface" designates the necessary hardware and software required to establish data communication connectivity across the various layers of the protocol stack, as is well known to a person skilled in the art. Preferably, standardized protocols are used. An access interface may for instance include an interface for an access link such as an ×DSL, ×PON, WMAN, or 3G link. A LAN interface may for instance include an interface for one or more of an IEEE 802.3 "Ethernet" link, an IEEE 802.11 "Wireless LAN" link. A PAN interface may for instance include a USB interface or a Bluetooth interface. Higher-layer protocols for communication over several network segments are preferably protocols from the TCP/IP protocol suite.

The client **300** comprises a standard decoder **310** for decoding the received video stream. The client **300** further comprises means **320** to allow the end user to select a region of interest, and to feed the resulting selection information back to the apparatus **200.**

In addition to the described apparatus, a system according to the invention may comprise a motion and feature analyzer **240** operating on the original video stream **199.** Preferably, this motion and feature analyzer **240** is centralized, or located "in the cloud", and offers its output to one or several apparatus **200** according to the invention. However, it is also possible to include the functions of the motion and feature analyzer **240** and a single apparatus **200** in the same device or product.

For reasons of clarity and brevity, certain features and advantages have only been described explicitly in connection with either the method embodiments or the apparatus/system embodiments. The skilled person will appreciate that features and advantages apply equally to the corresponding embodiments of the other category.

In an exemplary deployment, we consider a system composed of a panorama video stream analyzer **240** connected to N Adaptive RoI encoders **200,** each serving a client **300.** Each Adaptive RoI Encoder **200** comprises a motion adaptation module **220,** a panorama video reframing module **210** and a hinted encoder **230** delivering a client **300** as represented in Fig. 2.

The panorama motion analyzer **240** receives a raw or encoded panorama video stream **199** and delivers motion information to the motion adaptation module **220** of the N Adaptive RoI encoders **200.** If the panorama analyzer **240** performs its task in the compressed domain, the reframing module **210** shall allow for the necessary partial decoding. If the encoder **230** is an MPEG-7 compliant transcoder, hinting information may be provided as MPEG-7 transcoding hints to the encoder **230.** Such a transcoder is known from Peter M. Kuhn, Teruhiko Suzuki and Anthony Vetro, "MPEG-7 Transcoding Hints for Reduced Complexity and Improved Quality," in Proceeding of PacketVideo '01, 2001.

Each motion adaptation module **220** receives motion and feature information from the panorama motion analyzer **240** and the RoI position change requests from its client **300.** Based on this information, the module **220** outputs hints to its connected hinted encoder **230.** The panorama reframing module **210** also reads the RoI request and re-samples and crops the requested region of the panorama and prepares it for the hinted encoder **230** in the requested position and resolution. If the panorama region needs to be mapped in 2D (e.g. cylindrical map for spherical video) then this is also done in the panorama reframing module **210.**

Each hinted encoder **230** receives hints from its motion adaptation module **220** as well as raw cropped video stream at the requested resolution and position. The hints are composed of information that helps to reduce the computational complexity of the encoder **230** without penalty in compression performance. In the case of H.264, the hints can be composed of a direct motion vector, a mode decision (motion partition), a predicted motion vector on which the search window is to be centered as well as the size of this search window, an intra mode prediction, a skip decision, etc. An example of this can be found in Ralph A. Braspenning, Gerard de Haan, "True-motion estimation using feature correspondences", Visual Communications and Image Processing 2004, Vol. 5308, No. 1. (2004), pp. 396-407.

The main advantage of using these hints computed by the panorama analyzer **240** and the motion adaptation module **220** is that the task of motion prediction is performed just once for the whole panorama at high precision and does not have to be reproduced by all encoders **200.**

As a result of the centralization of this task, the overall computational complexity of the system decreases. This may be illustrated in an exemplary way by the following simplified calculation. If *C* is the computational complexity of a video encoder with *Cₘ* the complexity of motion estimation and *Cᵣ* the complexity of the remaining compression operations, then *C* = *Cᵣ* + *Cₘ* with *Cₘ* > *Cᵣ* (typically *Cₘ* >> *Cᵣ*). The computational complexity of the panorama analysis (step **150** of Figure 1; the function of the analyzer **240** in Figure 2) is denoted as *Cₚ* with *Cₚ* > *C*. In accordance with this system, serving N clients results in a complexity of only *Cₚ + N*×*Cᵣ,* instead of the classical linearity in function of (*Cₚ* + *Cᵣ*). Adding one client only adds an increment of Cr which is much smaller than the term *Cₘ* + *Cᵣ* in the traditional case.

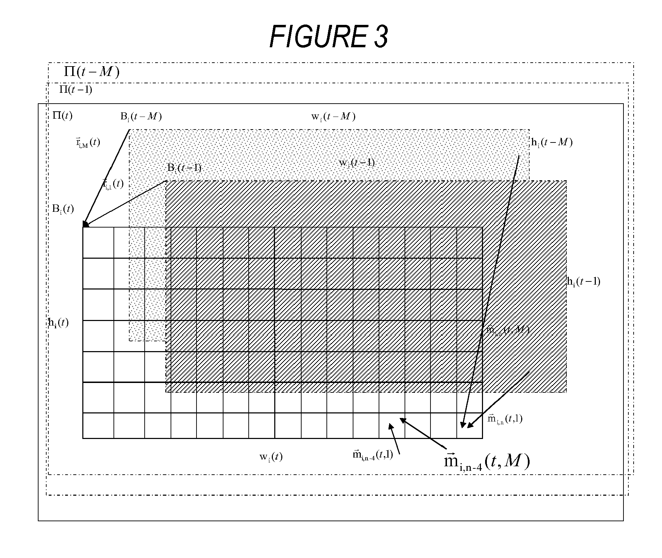

The motion information computed by the panorama motion and feature analyzer **240** needs to be adapted to the client request by the motion adaptation module **220.** This requires detecting whether the available motion vectors are pointing to panorama areas that are available as reference frames in the hinted encoder **230.** Such detection is represented on Figure 3, where the panorama raw video frames motion and feature information are depicted together with one example of RoI request for M frames. Each panorama frame π(t) at time t is analyzed so as to produce for each pixel feature information and motion information in the panorama motion and feature analysis module **240.** Feature information is composed of e.g. edge position and orientation information, a segmentation of the panorama together with SIFT descriptors while motion information is represented as one motion vector for each of the M previous frames π (*t*-1)... π(*t-M*) to serve as reference frames.

The motion adaptation module **220** receives the RoI request and computes the RoI position changes in the panorama for the previous *M* reference frames used by the hinted encoder **230.** The RoI motion changes are represented by the vectors denoted as r in Figure 3, where the current RoI macroblocks are represented as a regular grid and previous RoI frame positions are represented as dashed rectangular regions (with width *w*(*t*) and height *h*(*t*)).

The motion adaptation module then checks for every macroblock to be encoded by the hinted encoder **230,** whether the motion vectors computed for each pixel in the panorama by the panorama analyzer **240** are available in the reference frames of the hinted encoder. If so, it computes the best mode decision, adapts and aggregates motion vectors so as to compensate the RoI window position change in the panorama and sends this information as a hint to the hinted encoder **230.** If no motion vector is available for the macroblock, then features from the analyzer **240** are used to hint a search window if features of the current macroblock match with the ones of a given close region provided by the segmentation done by the panorama motion and feature analysis or an intra prediction mode also guided by these features (e.g. an intra prediction direction along detected edges in the macroblock, in 4×4 or 16×16 modes).

The RoI request from the client **300** consists in a RoI resolution and position description in the panorama. This information is used by the motion adaptation module **220** and by the panorama reframing module **210.** This module **210** selects the correct region of the panorama and subsamples or interpolates or remaps it towards the requested resolution. The output of these operations is then cropped and sent to the hinted encoder **230.**

Optionally, in case several clients **300** request the same RoI but with different resolution capabilities, these clients **300** can be aggregated as virtual super-clients. This is for instance possible if the RoI displacement is guided by a script (e.g. tracking of an object or person or displacements in the panorama space decided by a virtual or human production director). The hinted encoder uses a scalable encoding technique, such as the scalable extension of H.264, SVC. This enables adaptation of the stream to the needs of the client **300** while still reducing the computational complexity of the encoding. Hints then preferably also integrate intra- and inter-layer prediction hints based on motion and feature analysis. The panorama motion analyzer **240** then specifically outputs multi-resolution motion and feature information so as to enable this.

Optionally, the method according to the invention includes an additional step to estimate whether it is more efficient to use the motion analysis on the full panorama than to encode each RoI separately without hints. Re-using the notations defined above, a computation is performed to determine the minimum number *Nₚ* of clients for which the panorama motion analysis (step **150)** cost is compensated by the higher scalability. In accordance with the analysis provided above, Np is given by the following formula: *Nₚ*×(*Cₘ+Cᵣ*)*=Cₚ+Nₚ^{*}Cᵣ.* It follows that Np *= Cₚ*/*Cₘ.* Hence, in a preferred embodiment, the method according to the present invention uses the hinted encoding as described above after verifying that the number of clients to be served is at least equal to *Nₚ = Cₚ*/*Cₘ.*

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for encoding a selected spatial portion of an original video stream as a stand-alone video stream, said method comprising:
- obtaining picture element information pertaining to said selected spatial portion;
- obtaining encoding hints derived from a complementary spatial portion of said original video stream that is peripheral to said selected spatial portion; and
- encoding said selected spatial portion with use of said encoding hints.

2. The method according to claim 1, further comprising:
- obtaining said original video stream;
- obtaining selection information representing said selected spatial portion of said stand-alone video-stream; and
- extracting said picture element information pertaining to said selected spatial portion from said original video stream in accordance with said selection information.

3. The method according to claim 2, further comprising:
- obtaining motion and feature information pertaining to said original video stream;
- identifying relevant features pertaining to a region that is peripheral to said selected spatial portion in said motion and feature information; and
- deriving said encoding hints from said identified relevant features.

4. The method according to any of the preceding claims, wherein said encoding is performed by means of a scalable video codec.

5. The method according to claim 4, wherein said original video stream is provided as the base layer for said encoding.

6. The method according to claim 4 or 5, wherein said scalable video codec is an H.264 SVC codec.

7. The method according to any of the preceding claims, wherein said obtaining of said picture element information pertaining to said selected spatial portion comprises obtaining an encoded video stream, and wherein said encoding comprises transcoding said encoded video stream.

8. A computer program adapted to perform, when executed, the method according to any of the preceding claims 1-7.

9. A computer readable data storage medium comprising instructions to cause a data processing apparatus to carry out method steps according to any of the previous claims 1-7.

10. An apparatus for encoding a selected spatial portion of an original video stream as a stand-alone video stream, said apparatus comprising:
- a video input interface for receiving said original video stream;
- a selection information input interface for receiving selection information representing said selected spatial portion;
- a motion and feature information input interface for receiving feature information derived from said original video stream;
- a panorama reframer, operatively coupled to said video input interface and said selection information input interface, said panorama reframer being configured to extract picture element information pertaining to said selected spatial portion from said original video stream in accordance with said selection information;
- a motion adapter, operatively coupled to said motion and feature information input interface and said selection information input interface, said motion adapter being configured to identify relevant features pertaining to a region that is peripheral to said selected spatial portion in said motion and feature information and to derive encoding hints from said identified relevant features; and
- a hinted encoder, operatively coupled to said panorama reframer and said motion adapter, said hinted encoder being configured to encode said selected spatial portion with use of said encoding hints.

11. The apparatus according to claim 10, wherein said hinted encoder is configured to encode said selected spatial portion by means of a scalable video codec.

12. The apparatus according to claim 11, wherein said hinted encoder is configured to provide said original video stream as the base layer for said encoding.

13. The apparatus according to claim 11 or claim 12, wherein said scalable video codec is an H.264 SVC codec.

14. The apparatus according to any of claims 10-13, wherein said video input interface is configured to obtain said video stream as an encoded video stream, and wherein said hinted encoder is configured to transcode said encoded video stream.

15. A system for encoding a selected spatial portion of an original video stream as a stand-alone video stream, said system comprising a feature analyzer configured to extract motion information pertaining to features in said peripheral portion, and a number of apparatus according to any of claims 10-14, said feature analyzer being coupled to respective motion and feature information interfaces of said apparatus.
